# EUROPÄISCHE PATENTANMELDUNG

(11) **EP 2 156 938 A1**
(43) Veröffentlichungstag der Anmeldung: **24.02.2010**
(21) Anmeldenummer: 08014891.9
(22) Anmeldetag: 22.08.2008
(51) Int. Cl.: B29C 61/06, B29C 65/00, F16L 13/02, F16L 58/18, F16L 59/20

(54) **Verfahren zur nachträglichen Korrosionsschutzummantelung von Rohren**

(71) Anmelder: ISG Isolierchemie GmbH & Co. Kunststoff AG, 45701 Herten (DE)
(72) Erfinder: Janke, Klaus, 45699 Herten (DE)
(74) Vertreter: Nunnenkamp, Jörg

(57) **Zusammenfassung**

Gegenstand der vorliegenden Erfindung sind ein Verfahren und eine Ummantelungseinrichtung zur nachträglichen Korrosionsschutzummantelung von Rohren (1) zur Führung von Medien wie Gas, Wasser etc.. Dabei wird eine Schrumpfmanschette (5) zusammen mit einem Manschettenverschluss (6) um einen Ummantelungsbereich (3) herumgelegt und anschließend aufgeschrumpft. Erfindungsgemäß sind der Manschettenverschluss (6) und die Schrumpfmanschette (5) vor der Anbringung am Ummantelungsbereich (3) bereits miteinander verbunden.

## Beschreibung

Die Erfindung betrifft ein Verfahren zur nachträglichen Korrosionsschutzummantelung von Rohren zur Führung von Medien wie Gas, Wasser etc., wonach eine Schrumpfmanschette zusammen mit einem Manschettenverschluss um einen Ummantelungsbereich herumgelegt und anschließend aufgeschrumpft wird. Ebenfalls ist Gegenstand der Erfindung eine Ummantelungseinrichtung, die sich zur Durchführung des zuvor angegebenen Verfahrens besonders eignet.

Der nachträglichen Korrosionsschutzummantelung von Rohren zur Führung von Medien wie Gas, Wasser etc. kommt eine besondere Bedeutung zu. Denn solche Rohre werden üblicherweise im Erdreich oder auch oberhalb des Erdreiches geführt und sind damit ständig der Feuchtigkeit ausgesetzt. Da die fraglichen Rohre in der Regel aus Stahl hergestellt werden, kommt es zwangsläufig zur Korrosion. Als Folge hiervon stellen sich Leckagen ein, die insbesondere bei Erdgasleitungen schon aus Sicherheitsgründen nicht tolerabel sind. Aus diesem Grund werden die besagten Rohre zur Medienführung in der Regel mit einem ein- oder mehrschichtigen Isolierungsaufbau an ihrer Außenoberfläche ausgerüstet. Dieser setzt sich beispielsweise aus einer inneren Epoxidharz-Schicht, einer darauf folgenden Kleberschicht und dann einer äußeren Polyethylen-Schicht zusammen. Entsprechend ausgerüstete Rohre werden von der Industrie angeboten und druckschriftlich seit langem beschrieben, wie die den Ausgangspunkt bildende DE 10 2005 011 810 A1 mit den dort in Bezug genommenen Referenzen belegt.

Die Anforderung, eine nachträgliche Korrosionsschutzummantelung der Rohre anzubringen, stellt sich unter anderem bei Abzweigungen und insbesondere im Bereich von Rohrstößen bzw. Rohrverbindungen. Tatsächlich verfügen die miteinander zu einer Rohrleitung zu koppelnden Rohre im Stoßbereich in der Regel nicht über den bereits beschriebenen Isolierungsaufbau bzw. eine Beschichtung, um eine zumeist schweißende Verbindung der Rohrenden problemlos zu ermöglichen. In diesem Stoßbereich mit fehlender Beschichtung respektive Ummantelung ist es nun erforderlich, nach Herstellen beispielsweise der Schweißverbindung die nachträgliche Korrosionsschutzummantelung anzubringen, um eine durchgängige Versiegelung der gesamten Rohrleitung über ihre Länge und damit einen durchgängigen Korrosionsschutz zu gewährleisten. Diese nachträgliche Korrosionsschutzummantelung wird in der Regel dadurch bewerkstelligt, dass eine Schrumpfmanschette zusammen mit einem Manschettenverschluss um einen Ummantelungsbereich herumgelegt und anschließend aufgeschrumpft wird, wie dies auf der Internetseite "vogelsang-kunststoffe.de" der Anmelderin im Detail beschrieben wird.

Dabei sorgt der Manschettenverschluss zunächst dafür, dass die als gleichsam längs aufgeschnittener Schlauch ausgelegte Schrumpfmanschette im Bereich eines zwangsläufig zwischen ihren Manschettenkanten verbleibenden Spaltes geschlossen wird. Dazu wird der Manschettenverschluss im Allgemeinen erwärmt, geht in den flüssigen Zustand ganz oder teilweise über und sorgt dafür, dass die Schrumpfmanschette nach Abschluss dieser Behandlung den Ummantelungsbereich in der Art eines geschlossenen Schlauches überdeckt. Abschließend wird die Schrumpfmanschette erhitzt und auf den Ummantelungsbereich aufgeschrumpft, so dass der Ummantelungsbereich mit der Schrumpfmanschette eine innige und insbesondere korrosionsschützende Verbindung eingeht.

Bei der bisherigen Vorgehensweise besteht das Problem, dass die Anbringung der Schrumpfmanschette an dem Ummantelungsbereich und ihr Verschluss zu einem geschlossenen schlauchförmigen Gebilde mit Hilfe des Manschettenverschlusses besonderes Geschick und Erfahrung bei der Anbringung und Fixierung erfordern. Erschwerend kommt hinzu, dass entsprechend aufgebaute Rohrleitungen oftmals unter widrigen Umweltbedingungen aufgebaut und gewartet werden müssen. Hier will die Erfindung insgesamt Abhilfe schaffen.

Der Erfindung liegt das technische Problem zugrunde, ein derartiges Verfahren so weiterzuentwickeln, dass die Handhabung insgesamt vereinfacht ist und die Herstellung der nachträglichen Korrosionsschutzummantelung schnell und effizient gelingt. Außerdem soll eine hierzu besonders geeignete Ummantelungseinrichtung angegeben werden.

Zur Lösung dieser technischen Problemstellung ist bei einem gattungsgemäßen Verfahren zur nachträglichen Korrosionsschutzummantelung von Rohren zur Führung von Medien wie Gas, Wasser etc. vorgesehen, dass der Manschettenverschluss mit der Schrumpfmanschette vor der Anbringung am Ummantelungsbereich verbunden wird.

Erfindungsgemäß bilden folglich Manschettenverschluss und Schrumpfmanschette eine Baueinheit - zumindest dann, wenn der Manschettenverschluss am Ummantelungsbereich angebracht wird. Dazu wird die Schrumpfmanschette meistens bereits werksseitig mit dem Manschettenverschluss verbunden. Es kann grundsätzlich aber auch so vorgegangen werden, dass die Schrumpfmanschette und der Manschettenverschluss erst kurz vor der gemeinsamen Anbringung am Ummantelungsbereich, also montageseitig, eine Verbindung erfahren.

Dabei greift die Erfindung bevorzugt auf eine Adhäsiwerbindung zwischen dem Manschettenverschluss und der Schrumpfmanschette zurück. Diese Adhäsivverbindung kann grundsätzlich so bewerkstelligt werden, dass der Manschettenverschluss und/oder die Schrumpfmanschette mit einem entsprechenden Klebstoff bestrichen und dann miteinander vereinigt werden. Aus Gründen der einfachen Handhabung und kostengünstigen Anbringung der Schrumpfmanschette am Ummantelungsbereich greift die Erfindung jedoch im Allgemeinen auf ein separates Verbindungsmittel zurück, um den Manschettenverschluss und die Schrumpfmanschette miteinander zu vereinigen. Bei diesem separatem Verbindungsmittel handelt es sich üblicherweise um ein Klebeband und hier vorzugsweise ein sogenanntes Selbstklebeband.

Ganz besonders bevorzugt kommt ein Selbstklebeband mit einem Träger auf Polyesterbasis und einem Klebstoff auf Natur- und/oder Synthese-Kautschukbasis zum Einsatz. Ein Beispiel für ein solches Polyesterselbstklebeband wird in der DE 601 06 128 T2 vorgestellt. Vergleichbare Materialien werden auch von der Firma 3M unter dem Markennamen "Super Bond" angeboten.

Dabei wird die Auslegung in der Regel so getroffen, dass sich der Manschettenverschluss, die Schrumpfmanschette und das Verbindungsmittel bzw. Klebeband von ihrer Länge her im Wesentlichen entsprechen. Außerdem wird das Verbindungsmittel meistens beabstandet von einer der beiden Manschettenkanten der Schrumpfmanschette an die besagte Schrumpfmanschette angeschlossen. Das heißt, der Manschettenverschluss wird mit Überlapp mit der Schrumpfmanschette durch das Verbindungsmittel gekoppelt. Dadurch ist sichergestellt, dass der Manschettenverschluss den bereits angesprochenen Spalt zwischen den beiden Manschettenkanten zuverlässig verschließt.

Die Schrumpfmanschette als solche verfügt in der Regel über einen zweischichtigen Aufbau. Die Basis und äußere Schicht ist aus einem Kunststoff, insbesondere einem vernetzten und verstreckten Kunststoff aufgebaut. Hier hat sich besonders Polyethylen (PE) als günstig erwiesen. Tatsächlich sind Kunststoffe wie Polypropylen (PP) oder Polyethylen (PE) besonders geeignet, Korrosionen von beispielsweise erdverlegten Metallrohren zum Transport von flüssigen oder gasförmigen Medien zu verhindern, wie dies beispielsweise in der DE 299 12 689 U1 beschrieben wird.

Das Vernetzen und Verstrecken der Schrumpfmanschette bzw. ihrer Basis aus der vernetzten und verstreckten Kunststoffschicht wird wie üblich so durchgeführt, dass die fragliche Kunststoffschicht zunächst hergestellt (gespritzt und/oder extrudiert) wird und anschließend eine Vernetzung erfährt. Diese Vernetzung kann dadurch erfolgen, dass der sogenannte Vorformling unter Feuchtigkeitseinwirkung vernetzt wird oder dies mit Hilfe einer Strahlenbehandlung (Gammastrahlen) erfolgt. Anschließend wird die betreffende Kunststoffschicht als Basis der Schrumpfmanschette in vernetztem Zustand aufgeweitet und abgekühlt. Durch dieses Abkühlen wird der aufgeweitete Zustand des Formlings gleichsam eingefroren und fixiert, wie dies grundsätzlich in der DE 31 33 091 A1 beschrieben wird.

Zu dieser vernetzten und verstreckten Kunststoffschicht als Basis der Schrumpfmanschette tritt eine innenseitige Beschichtung hinzu. Bei dieser innenseitigen Beschichtung handelt es sich um eine solche, die aus beispielsweise einem Klebstoff und/oder einem Elastomer aufgebaut ist. Hier hat sich insbesondere Butyl-Kautschuk oder ein anderer Kautuschuk als besonders günstig erwiesen. Denn der besagte Kautschuk ist nach Aufschrumpfen der Schrumpfmanschette in der Lage, eine sogenannte Selbstheilung der Schrumpfmanschette zu bewirken. Das heißt, etwaige Beschädigungen der Schrumpfmanschette von außen, wie Risse oder Einschnitte, werden dadurch automatisch verschlossen, dass die durch den Schrumpfprozess unter Druck stehende innenseitige Beschichtung in eine entsprechende Öffnung ausweicht (in diese "hineinfließt") und diese verschließt.

Die Verwendung des separaten Verbindungsmittels für die Kopplung von Manschettenverschluss und Schrumpfmanschette und hier der Einsatz eines Polyester-Selbstklebebandes ist in dem beschriebenen Zusammenhang von besonderer Bedeutung. Denn derartige Polyester-Klebebänder verfügen aufgrund des eingesetzten Trägermaterials aus Polyester, das heißt einem Polymer mit Ester-Bindung in ihrer Hauptkette, über eine hohe Alterungsbeständigkeit und große Reißfestigkeit. Daneben wird eine besonders ausgeprägte chemische Beständigkeit und ebenfalls eine gute Abriebfestigkeit beobachtet. Hinzu kommt eine relativ hohe Temperaturstabilität, welche bei der Vereinigung des Manschettenverschlusses mit der Schrumpfmanschette und dem anschließenden Schrumpfvorgang von besonderer Bedeutung ist.

Denn der Manschettenverschluss wird an der Schrumpfmanschette üblicherweise durch Erhitzen mit einer offenen Flamme fixiert bzw. die Flamme wird dazu genutzt, den zwischen den beiden Manschettenkanten zwangsläufig verbleibenden Spalt zu schließen. Weder bei diesem Vorgang noch bei dem anschließenden Erhitzen der gesamten Schrumpfmanschette mit aufgebrachtem Manschettenverschluss zum Zwecke des Schrumpfens wird das separate Verbindungsmittel bzw. Klebeband in seiner Konsistenz beeinträchtigt.

Das lässt sich im Wesentlichen darauf zurückführen, dass üblicherweise ein transparentes Polyester-Selbstklebeband mit einseitiger Adhäsivbeschichtung relativ geringer Dicke im Submillimeterbereich zum Einsatz kommt, folglich die Wärme hauptsächlich vom Manschettenverschluss und der Schrumpfmanschette aufgenommen wird. Im Übrigen liegt die Schmelztemperatur des Manschettenverschlusses (aus PE; ca. 80°C) meistens deutlich unter derjenigen des Polyester-Selbstklebebandes (>100°C). Auch die Schrumpftemperatur ist darunter angesiedelt.

Jedenfalls führen die zum Verschluss der Schrumpfmanschette mit Hilfe des Manschettenverschlusses erforderlichen Temperaturen und diejenigen für die Schrumpfung im Bereich von ca. 80° bis 100°C nicht zu einer signifikanten Beschädigung des separaten Verbindungsmittels bzw. Polyester-Selbstklebebandes.

Folglich behält der Manschettenverschluss seine Positionierung gegenüber den Manschettenkanten und dem dazwischen befindlichen und zu verschließenden Spalt während des gesamten Vorganges bei, so dass die Schrumpfmanschette den Ummantelungsbereich in der Art eines geschlossenen Schlauches umschließt und aufgrund ihres Schrumpfverhaltens korrosionsdicht gegenüber der Umgebung versiegelt. - Der Träger des Polyester-Selbstklebebandes ist im Allgemeinen aus Polyethylenteraphtalat (PET) aufgebaut, wenngleich an dieser Stelle auch Polycarbonate (PC) zum Einsatz kommen können. In jedem Fall sind derartige Polyester-Selbstklebebänder nicht nur reißfest, sondern auch antistatisch, was in Verbindung mit Erdgasleitungen natürlich von besonderer Bedeutung ist.

Wie die Schrumpfmanschette bzw. die Basis der Schrumpfmanschette so ist auch der Manschettenverschluss üblicherweise aus einem thermoplastischem Kunststoff, vorzugsweise dem gleichen thermoplastischem Kunststoff wie die Basis der Schrumpfmanschette aufgebaut. Bewährt hat sich hier wiederum Polyethylen (PE) oder auch gegebenenfalls Polypropylen (PP). Dabei arbeitet man meistens mit einem Manschettenverschluss, welcher in der Art eines Lappens ausgebildet ist und einzig aus dem fraglichen Kunststoff besteht. Auch in diesem Fall greift die Erfindung auf einen vernetzten Kunststoff für die Herstellung des Manschettenverschlusses zurück, der verstreckt oder auch nicht verstreckt sein kann.

Für das Klebeband bzw. separate Verbindungsmittel gilt, dass dieses in der Regel einseitig mit der bereits angesprochenen Adhäsivbeschichtung ausgerüstet ist. Bei dieser Adhäsivbeschichtung kommt im Allgemeinen ein Natur- und/oder Synthesekautschuk zum Einsatz, welcher eine sehr gute Soforthaftung auch auf schwierigen Oberflächen wie insbesondere Polyethylen (PE) zur Verfügung stellt. Dadurch eignet sich das fragliche Klebeband besonders für die Anbringung einerseits auf dem Manschettenverschluss und andererseits der Schrumpfmanschette, die - wie beschrieben - vorteilhaft und jeweils aus Polyethylen aufgebaut sind.

Schlussendlich hat es sich noch bewährt, wenn die innenseitige Beschichtung der Schrumpfmanschette aus dem Klebstoff und/oder Kautschuk in Manschettenlängsrichtung verlaufende Rillen aufweist. Auf diese Weise kann die innenseitige Beschichtung werkseitig mit einem Schutzfilm ausgerüstet werden, der sich kurz vor der Anbringung am Ummantelungsbereich unschwer entfernen lässt und zuvor dafür sorgt, dass die innenseitige Beschichtung der Schrumpfmanschette keine Verschmutzungen erfährt.

Im Ergebnis werden ein Verfahren zur nachträglichen Korrosionsschutzummantelung und eine zugehörige Ummantelungseinrichtung zur Verfügung gestellt, die sich besonders für die nachträgliche Korrosionsschutzummantelung von Rohren zur Führung von Medien wie Gas, Wasser etc. eignen. Das lässt sich darauf zurückführen, dass die an dieser Stelle im Ummantelungsbereich anzubringende Schrumpfmanschette problemlos und schnell auch von ungeübtem Personal angebracht werden kann. Durch die Fixierung des Manschettenverschlusses an der Schrumpfmanschette ist in jedem Fall gewährleistet, dass ein zwangsläufig zwischen den Manschettenkanten verbleibender Spalt zuverlässig verschlossen wird. Das anschließende Aufschrumpfen im Ummantelungsbereich der Schrumpfmanschette stellt dann noch sicher, dass der Ummantelungsbereich eine korrosionsresistente Versiegelung erhält, die dauerhaft und mit Selbsthellungseffekt für den geforderten Korrosionsschutz sorgt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Ummantelungseinrichtung in einer perspektivischen Ansicht von außen,
- Fig. 2: den Gegenstand nach Fig. 1 in einer perspektivischen Innenansicht und
- Fig. 3: den Gegenstand nach den Fig. 1 und 2 in montiertem Zustand.

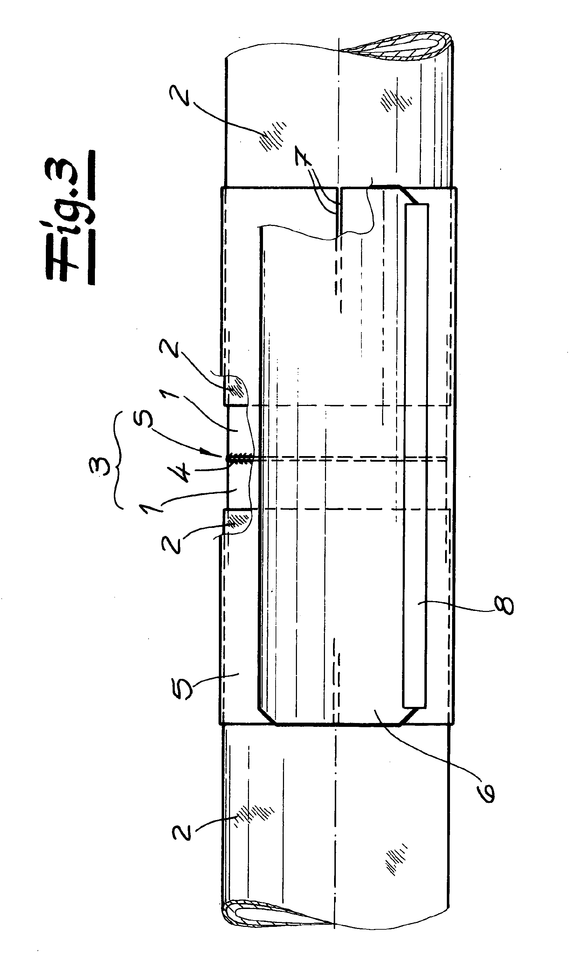

In den Figuren ist eine Ummantelungseinrichtung dargestellt, die sich zur nachträglichen Korrosionsschutzummantelung von Rohren 1 besonders eignet. Die Rohre 1 dienen im Ausführungsbeispiel zur Führung von Medien wie Gas, Wasser oder dergleichen. Meistens werden derartige Rohre 1 in der Erde verlegt, sind jedenfalls der Witterung ausgesetzt und verfügen deshalb über eine außen aufgebrachte Kunststoffbeschichtung 2 aus in der Regel Polyethylen (PE). Diese Kunststoffbeschichtung 2 ist im Bereich einer in Fig. 3 lediglich angedeuteten Stoßverbindung S entfernt, so dass die beiden Rohre 1 im Beispielfall der Fig. 3 durch eine dort ebenfalls angedeutete Schweißnaht 4 miteinander zu einer Rohrleitung verbunden werden können.

Der Stoßbereich S definiert einen Ummantelungsbereich 3, welcher nach Anbringung und gegebenenfalls Überprüfung der Schweißverbindung 4 wieder versiegelt werden muss bzw. mit einer nachträglichen Korrosionsschutzummantelung auszurüsten ist. Dazu verfügt die Ummantelungseinrichtung in ihrem grundsätzlichen Aufbau über eine Schrumpfmanschette 5 und einen Manschettenverschluss 6. Die Schrumpfmanschette 5 wird um den Ummantelungsbereich 3 herumgelegt. Im Anschluss daran werden beide Manschettenkanten 7 bzw. ein zwischen Ihnen verbleibender und zwangläufiger Spalt durch den Manschettenverschluss 6 flüssigkeitsdicht überbrückt.

Das heißt, die Schrumpfmanschette 5 wird mit Hilfe des Manschettenverschlusses 6 zu einem geschlossenen Schlauch aufgerüstet. Dieser geschlossene Schlauch aus der Schrumpfmanschette 5 und dem Manschettenverschluss 6 umschließt den Ummantelungsbereich 3 zwischen den beiden miteinander gekoppelten Rohren 1, wie dies in der Fig. 3 dargestellt ist. Anschließend wird die Schrumpfmanschette 5 auf den Ummantelungsbereich 3 aufgeschrumpft, so dass sich die Schrumpfmanschette 5 (zusammen mit dem Manschettenverschluss 6) flüssigkeitsdicht an die jeweils äußere Rohrwandung bzw. die Kunststoffbeschichtung 2 der miteinander gekoppelten Rohre 1 anschmiegt und für eine durchgängige korrosionsresistente Versiegelung der solchermaßen aufgebauten Rohrleitung sorgt.

Erfindungsgemäß ist der lappenartig aufgebaute Manschettenverschluss 6 mit der Schrumpfmanschette 5 adhäsiv verbunden. Dazu greift die Erfindung auf ein separates Verbindungsmittel bzw. ein Selbstklebeband 8 zurück, wie man es am besten in der Fig. 3 erkennt. Bei dem separaten Verbindungsmittel bzw. Selbstklebeband 8 handelt es sich um ein Polyester-Selbstklebeband, welches transparent gestaltet ist und einen Träger aus einem Polyestermaterial mit einseitig aufgebrachter Kleberbeschichtung bzw. Adhäsivbeschichtung aufweist. Die Adhäsibbeschichtung ist aus einem Natur- und/oder Synthesekautschuk aufgebaut und ermöglicht eine unmittelbare Soforthaftung einerseits auf dem Manschettenverschluss 6 und andererseits auf der Schrumpfmanschette 5.

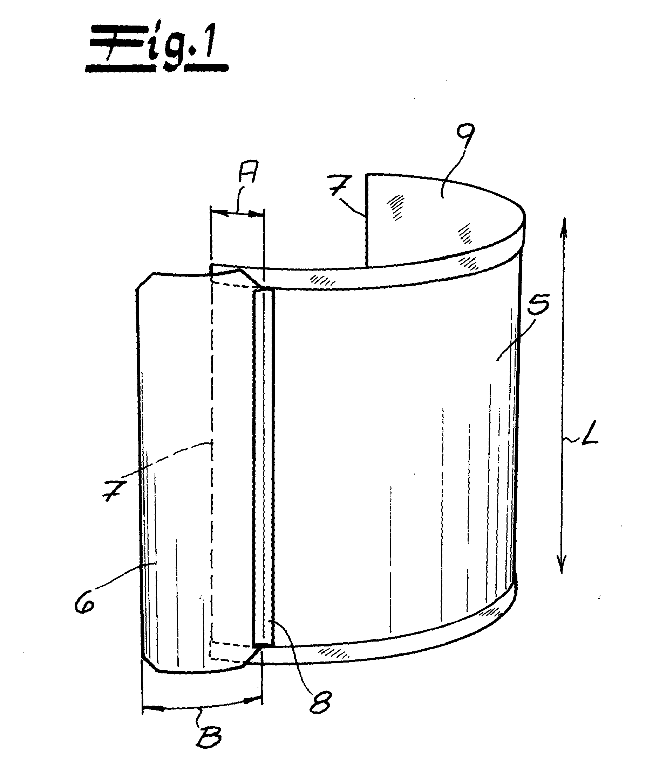

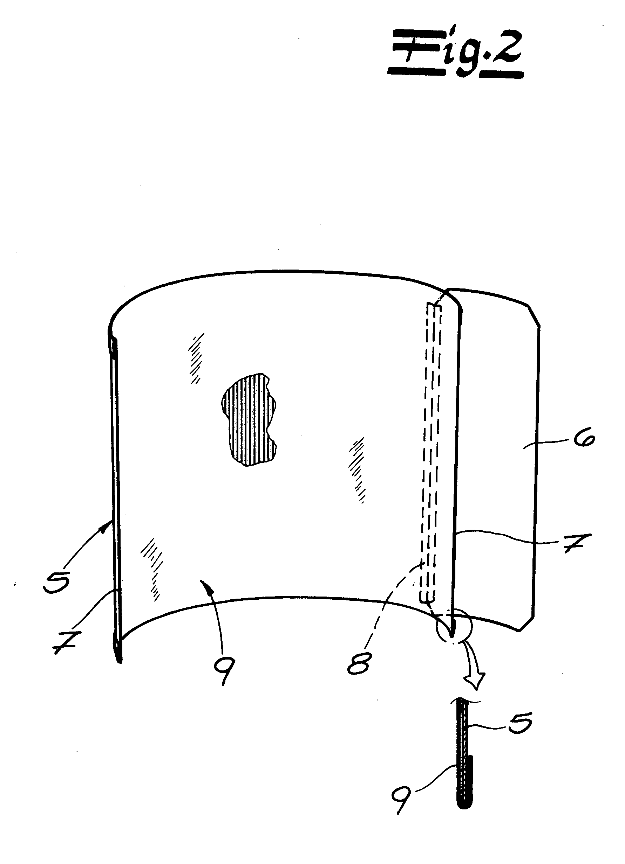

Tatsächlich erkennt man bei einer vergleichenden Betrachtung der Fig. 1 und 2, dass das separate Verbindungsmittel bzw. Selbstklebeband 8 beabstandet von einer der beiden Manschettenkanten 7 an der Schrumpfmanschette 5 festgelegt ist, und zwar in Längsrichtung L der herzustellenden Rohrverbindung aus den beiden Rohren 1. Der zugehörige Abstand A von der Manschettenkante 7 beträgt im Beispielfall in etwa die Hälfte einer Breite B des Manschettenverschlusses 6. Von seiner Länge her ist der Manschettenverschluss 6 an diejenigen der Schrumpfmanschette 5 angepasst. Das heißt, Manschettenverschluss 6 und Schrumpfmanschette 5 verfügen im Wesentlichen über die gleiche Länge in Längsrichtung L der Rohrverbindung bzw. des Ummantelungsbereiches 3. Ebenfalls an die Länge des Manschettenverschlusses 6 und diejenige der Schrumpfmanschette 5 ist das Verbindungsmittel bzw. Selbstklebeband 8 angepasst. Man erkennt, dass das betreffende Selbstklebeband 8 von seiner Breite her hälftig einerseits mit dem Manschettenverschluss 6 und andererseits mit der Schrumpfmanschette 5 unter Berücksichtigung des Abstandes A von dessen einer Manschettenkante 7 verbunden ist.

Der Manschettenverschluss 6 ist durchgängig aus vernetztem und nicht verstrecktem Polyethylen in der Art eines Lappens aufgebaut. Dagegen verfügt die Schrumpfmanschette 5 über einen zweischichtigen Aufbau. Tatsächlich ist diese mit einer äußeren Basis oder äußeren Schicht aus Kunststoff, im Ausführungsbeispiel aus vernetztem und verstrecktem PE aufgebaut. Zu dieser äußeren Beschichtung aus Kunststoff tritt eine innenseitige und den Rohren 1 zugewandte Beschichtung hinzu, die aus Klebstoff und/oder Kautschuk besteht. In der Darstellung nach Fig. 2 ist diese innenseitige Beschichtung mit einer Schutzhülle 9 abgedeckt, um Verschmutzungen beim Transport zu vermeiden. Außerdem verfügt die innenseitige Beschichtung über in Längsrichtung L verlaufende Rillen, so dass sich die Schutzhülle 9 einfach entfernen lässt.

## Patentansprüche

1. Verfahren zur nachträglichen Korrosionsschutzummantelung von Rohren (1) zur Führung von Medien wie Gas, Wasser etc., wonach eine Schrumpfmanschette (5) zusammen mit einem Manschettenverschluss (6) um einen Ummantelungsbereich (3) herumgelegt und anschließend aufgeschrumpft wird, **dadurch gekennzeichnet, dass** der Manschettenverschluss (6) mit der Schrumpfmanschette (5) vor der Anbringung am Ummantelungsbereich (3) verbunden wird.

2. Verfahren nach Anspruch 1, **dadurch gekennzeichnet, dass** der Manschettenverschluss (6) mit der Schrumpfmanschette (5) adhäsiv verbunden wird.

3. Verfahren nach Anspruch 1 oder 2, **dadurch gekennzeichnet, dass** zur Verbindung von Manschettenverschluss (6) und Schrumpfmanschette (5) ein separates Verbindungsmittel (8) vorgesehen wird.

4. Verfahren nach Anspruch 3, **dadurch gekennzeichnet, dass** als separates Verbindungsmittel (8) ein Klebeband, insbesondere Selbstklebeband (8), eingesetzt wird.

5. Ummantelungseinrichtung zur nachträglichen Korrosionsschutzummantelung von Rohren (1) zur Führung von Medien wie Gas, Wasser etc., vorzugsweise zur Durchführung des Verfahrens nach einem der Ansprüche 1 bis 4, mit einer Schrumpfmanschette (5) und einem Manschettenverschluss (6), **dadurch gekennzeichnet, dass** der Manschettenverschlus (6) mit der Schrumpfmanschette (5) verbunden ist.

6. Ummantelungseinrichtung nach Anspruch 5, **dadurch gekennzeichnet, dass** der Manschettenverschluss (6) und die Schrumpfmanschette (5) adhäsiv miteinander verbunden sind.

7. Ummantelungseinrichtung nach Anspruch 5 oder 6, **dadurch gekennzeichnet, dass** ein separates Verbindungsmittel (8) für die Kopplung von Manschettenverschluss (6) und Schrumpfmanschette (5) vorgesehen ist.

8. Ummantelungseinrichtung nach Anspruch 7, **dadurch gekennzeichnet, dass** das separate Verbindungsmittel (8) als Selbstklebeband (8), vorzugsweise Polyester-Selbstklebeband (8) ausgebildet ist.

9. Ummantelungseinrichtung nach Anspruch 7 oder 8, **dadurch gekennzeichnet, dass** das Verbindungsmittel (8) einseitig mit einer Adhäsivbeschichtung ausgerüstet und im Wesentlichen temperaturresistent ausgelegt ist.

10. Ummantelungseinrichtung nach einem der Ansprüche 5 bis 9, **dadurch gekennzeichnet, dass** die Schrumpfmanschette (5) aus einer vernetzten und verstreckten Kunststoffschicht als Basis mit innenseitiger Beschichtung aus beispielsweise Klebstoff und/oder einem Elastomer, beispielsweise Kautschuk, aufgebaut ist.

11. Ummantelungseinrichtung nach einem der Ansprüche 5 bis 10, **dadurch gekennzeichnet, dass** der Manschettenverschluss (6) aus einem vernetzen sowie gegebenenfalls verstreckten Kunststoff aufgebaut ist.

12. Ummantelungseinrichtung nach einem der Ansprüche 5 bis 11, **dadurch gekennzeichnet, dass** die innenseitige Beschichtung der Schrumpfmanschette (5) in Längsrichtung verlaufende Rillen aufweist.

13. Ummantelungseinrichtung nach einem der Ansprüche 5 bis 12, **dadurch gekennzeichnet, dass** sich der Manschettenverschluss (6), die Schrumpfmanschette (5) und das Verbindungsmittel (8) von ihrer Länge her im Wesentlichen entsprechen.

14. Ummantelungseinrichtung nach einem der Ansprüche 5 bis 13, **dadurch gekennzeichnet, dass** das Verbindungsmittel (8) beabstandet (Abstand A) von einer Manschettenkante (7) an die Schrumpfmanschette (5) angeschlossen ist und diese mit dem Manschettenverschluss (6) verbindet.

15. Verwendung einer Schrumpfmanschette (5) zusammen mit einem Manschettenverschluss (6) zur nachträglichen Korrosionsschutzummantelung von Rohren (1) zur Führung von Medien wie Gas, Wasser etc., wobei die Schrumpfmanschette (5) zusammen mit dem Manschettenverschluss (6) um einen Ummantelungsbereich (3) herumgelegt und anschließend aufgeschrumpft wird, und wobei der Manschettenverschluss (6) mit der Schrumpfmanschette (5) verbunden ist.

## Geänderte Patentansprüche

### Geänderte Patentansprüche gemäss Regel 137(2) EPÜ.

**1.** Verfahren zur nachträglichen Korrosionsschutzummantelung von Rohren (1) zur Führung von Medien wie Gas, Wasser etc., wonach
- eine Schrumpfmanschette (5) zusammen mit einem Manschettenverschluss (6) um einen Ummantelungsbereich (3) herumgelegt und anschließend aufgeschrumpft wird, und wonach
- der Manschettenverschluss (6) mit der Schrumpfmanschette (5) vor der Anbringung am Ummantelungsbereich (3) verbunden wird,
**dadurch gekennzeichnet, dass**
der Manschettenverschluss (6) mit der Schrumpfmanschette (5) adhäsiv mittels eines als Polyester-Selbstklebeband (8) ausgebildeten separaten Verbindungsmittels (8) verbunden wird.

**2.** Ummantelungseinrichtung zur nachträglich Korrosionsschutzummantelung von Rohren (1) zur Führung von Medien wie Gas, Wasser etc., vorzugsweise zur Durchführung des Verfahrens nach Anspruch 1, mit einer Schrumpfmanschette (5) und einem Manschettenverschluss (6), wobei der Manschettenverschluss (6) mit der Schrumpfmanschette (5) verbunden ist,
**dadurch gekennzeichnet, dass**
der Manschettenverschluss (6) mit der Schrumpfmanschette (5) adhäsiv mittels eines als Polyester-Selbstklebeband (8) ausgebildeten separaten Verbindungsmittels (8) verbunden ist.

**3.** Ummantelungseinrichtung nach Anspruch 2, **dadurch gekennzeichnet, dass** Polyester-Selbstklebeband (8) einseitig mit einer Adhäsivbeschichtung ausgerüstet und im Wesentlichen temperaturresistent ausgelegt ist.

**4.** Ummantelungseinrichtung nach Anspruch 2 oder 3, **dadurch gekennzeichnet, dass** die Schrumpfmanschette (5) aus einer vernetzten und verstreckten Kunststoffschicht als Basis mit innenseitiger Beschichtung aus beispielsweise Klebstoff und/oder einem Elastomer, beispielsweise Kautschuk, aufgebaut ist.

**5.** Ummantelungseinrichtung nach einem der Ansprüche 2 bis 4, **dadurch gekennzeichnet, dass** der Manschettenverschluss (6) aus einem vernetzten sowie gegebenenfalls verstreckten Kunststoff aufgebaut ist.

**6.** Ummantelungseinrichtung nach einem der Ansprüche 2 bis 5, **dadurch gekennzeichnet, dass** die innenseitige Beschichtung der Schrumpfmanschette (5) in Längsrichtung verlaufende Rillen aufweist.

**7.** Ummantelungseinrichtung nach einem der Ansprüche 2 bis 6, **dadurch gekennzeichnet, dass** sich der Manschettenverschluss (6), die Schrumpfmanschette (5) und das Verbindungsmittel (8) von ihrer Länge her im Wesentlichen entsprechen.

**8.** Ummantelungseinrichtung nach einem der Ansprüche 2 bis 7, **dadurch gekennzeichnet, dass** das Verbindungsmittel (8) beabstandet (Abstand A) von einer Manschettenkante (7) an die Schrumpfmanschette (5) angeschlossen ist und diese mit dem Manschettenverschluss (6) verbindet.

**9.** Verwendung einer Schrumpfmanschette (5) zusammen mit einem Manschettenverschluss (6) zur nachträglichen Korrosionsschutzummantelung von Rohren (1) zur Führung von Medien wie Gas, Wasser etc., wobei
- die Schrumpfmanschette (5) zusammen mit dem Manschettenverschluss (6) um einen Ummantelungsbereich (3) herumgelegt und anschließend aufgeschrumpft wird, und wobei
- der Manschettenverschluss (6) mit der Schrumpfmanschette (5) adhäsiv mittels eines als Polyester-Selbstklebeband (8) ausgebildeten separaten Verbindungsmittels (8) vor der Anbringung am Ummantelungsbereich (3) verbunden wird.
